# EUROPÄISCHE PATENTANMELDUNG

(11) **EP 1 070 941 A1**
(43) Veröffentlichungstag der Anmeldung: **24.01.2001**
(21) Anmeldenummer: 99114510.3
(22) Anmeldetag: 23.07.1999
(51) Int. Cl.: G01F 23/284

(54) **Vorrichtung zum Messen des Füllstandes in einem Behälter**

(71) Anmelder: Endress + Hauser GmbH + Co., 79689 Maulburg (DE)
(72) Erfinder: Neuhaus, Joachim, Dipl.-Phys., 79585 Steinen (DE); Lütke, Wolfram, Dipl.-Ing., 79594 Inzlingen (DE); Thoren, Werner Dipl.-Phys., 79585 Steinen (DE); Reimelt, Ralf, Dipl.-Ing., 79211 Freiburg (DE)
(74) Vertreter: Andres, Angelika

(57) **Zusammenfassung**

Die Erfindung bezieht sich auf eine Vorrichtung zum Messen des Füllstandes (F) eines Füllguts (7) in einem Behälter (6) mit einer Signalerzeugungseinheit (3a), einer Einkoppeleinheit (4), einem leitfähigen Element (2) und einer Empfangs-/Auswerteeinheit (3b).

Der Erfindung liegt die Aufgabe zugrunde, eine Vorrichtung vorzuschlagen, bei der das leitfähige Element (2) eines Füllstandsmeßgeräts (1), insbesondere eines Mikrowellensensors, nicht in direktem Kontakt mit dem zu messenden Füllgut (7) kommt.

Die Aufgabe wird erfindungsgemäß dadurch gelöst, daß die Signalerzeugungseinheit (3a) hochfrequente Meßsignale erzeugt, daß die Einkoppeleinheit (4) die Meßsignale auf das leitfähige Element (2) einkoppelt, daß das leitfähige Element (2) eine Länge aufweist, die zumindest dem maximalen Füllstandsmeßbereich in dem Behälter (6) entspricht, daß das leitfähige Element (2) in einem vorgegebenen Abstand (a) zu dem Füllgut (7) angeordnet ist und sein Abstand (a) so bemessen ist, daß das von den Meßsignalen erzeugte elektromagnetische Feld (5) mit dem Füllgut (7) in Wechselwirkung tritt und bei Auftreffen auf die Oberfläche (8) des Füllguts (7) teilweise reflektiert wird, und daß die Empfangs-/Auswerteeinheit (3b) den zeitlichen Signalverlauf der reflektierten und an dem leitfähigen Element (2) entlanggeführten Meßsignale erfaßt und auswertet.

## Beschreibung

Die Erfindung bezieht sich auf eine Vorrichtung zur Bestimmung des Füllstandes eines Füllguts in einem Behälter mit einer Signalerzeugungseinheit, einer Einkoppeleinheit, einem leitfähigen Element und einer Empfangs-/Auswerteeinheit.

Zur Messung des Füllstandes eines Füllguts in einem Behälter werden Meßsysteme eingesetzt, die unterschiedliche physikalische Größen messen. Anhand dieser Größen wird nachfolgend die gewünschte Information über den Füllstand abgeleitet. Neben mechanischen Abtastern werden kapazitive, konduktive oder hydrostatische Meßsonden eingesetzt, ebenso wie Detektoren, die auf der Basis von Ultraschall, Mikrowellen oder radioaktiver Strahlung arbeiten.

Bei einer Vielzahl von Einsatzgebieten, beispielsweise in der Petrochemie, Chemie und Lebensmittelindustrie, sind hochgenaue Messungen des Füllstandes von Flüssigkeiten oder Schüttgütern in Behältern (Tanks, Silos, usw.) gefordert. Deshalb kommen hier in zunehmendem Maße Sensoren zum Einsatz, bei denen kurze elektromagnetische Hochfrequenzimpulse oder kontinuierliche Mikrowellen in eine leitende Seilsonde eingekoppelt und mittels der Seilsonde in den Behälter, in dem das Füllgut gelagert ist, hineingeführt werden. Bei der Seilsonde handelt es sich um ein beliebiges leitfähiges Element.
Physikalisch gesehen wird bei dieser Meßmethode der Effekt ausgenutzt, daß an der Grenzfläche zwischen zwei verschiedenen Medien, z. B. Luft und Öl oder Luft und Wasser, infolge der sprunghaften Änderung (Diskontinuität) der Dielektrizitätszahlen beider Medien ein Teil der geführten Hochfrequenz-Impulse bzw. der geführten Mikrowellen reflektiert und über das leitfähige Element zurück in eine Empfangsvorrichtung geleitet wird. Der reflektierte Anteil ist dabei um so größer, je größer der Unterschied in den Dielektrizitätszahlen der beiden Medien ist. Anhand der Laufzeit des reflektierten Anteils der Hochfrequenz-Impulse bzw. der Mikrowellen läßt sich die Entfernung zur Grenzfläche bestimmen. Bei Kenntnis der Leerdistanz des Behälters kann der Füllstand des Füllguts in dem Behälter berechnet werden.

Sensoren mit geführten hochfrequenten Signalen (Impulse oder Wellen) zeichnen sich gegenüber Sensoren, die hochfrequente Impulse oder Wellen frei abstrahlen (Freifeld-Mikrowellen-Systeme (FMR) bzw. 'echte Radar-Systeme') durch eine wesentlich geringere Dämpfung aus. Grund hierfür ist, daß der Leistungsfluß ganz gezielt entlang der Seilsonde bzw. des leitfähigen Elements erfolgt. Weiterhin haben die Sensoren mit geführten hochfrequenten Signalen eine höhere Meßgüte im Nahbereich als die frei abstrahlenden Sensoren.

Der Vorteil von Sensoren mit geführten hochfrequenten Signalen liegt darüber hinaus in der hohen Sicherheit und Zuverlässigkeit der Füllstandsmessung. Dies rührt daher, daß die Messung mit geführten Meßsignalen weitgehend unabhängig ist von den Produkteigenschaften des Füllguts (Feuchtigkeit, Dielektrizitätszahl, Füllgutwechsel), der Behälterkonstruktion (Werkstoffe, Geometrie) oder den sonstigen Betriebsbedingungen (Staub, Ansatz und Schüttgutwinkel).

Der Erfindung liegt die Aufgabe zugrunde, eine Vorrichtung vorzuschlagen, bei der das leitfähige Element des Sensors nicht in direktem Kontakt mit dem zu messenden Füllgut kommt.

Die Aufgabe wird erfindungsgemäß durch die folgenden Merkmale gelöst: die Signalerzeugungseinheit erzeugt hochfrequente Meßsignale; diese Meßsignale koppelt die Einkoppeleinheit auf das leitfähige Element ein; das leitfähige Element weist eine Länge auf, die zumindest dem maximalen Füllstand des Behälters entspricht; das leitfähige Element ist in einem vorgegebenen Abstand zu dem Füllgut angeordnet; der Abstand ist so bemessen, daß das von den Meßsignalen erzeugte elektromagnetische Feld mit dem Füllgut in Wechselwirkung tritt und bei Auftreffen auf die Oberfläche des Füllguts teilweise reflektiert wird; der zeitliche Verlauf der reflektierten und an dem leitfähigen Element entlanggeführten Echosignale wird von der Empfangs-/Auswerteeinheit erfaßt und auswertet.

Gemäß einer bevorzugten Weiterbildung der erfindungsgemäßen Vorrichtung ist vorgesehen, daß das leitfähige Element außerhalb des Behälters angeordnet ist. Der Behälter selbst muß in diesem Fall zumindest innerhalb eines definierten Einflußbereichs des leitfähigen Elements aus einem nicht leitfähigen Material bestehen. Übliche Materialien sind Kunststoffe oder Gläser.

Die Anordnung des Füllstandsmeßgeräts außerhalb des Behälters hat natürliche eine Reihe von auf der Hand liegenden Vorteilen. Abgesehen von der einfachen Montage, wird durch die Anordnung des Meßgeräts im Außenbereich des zu messenden Füllguts eine Verschmutzung oder im Falle eines aggressiven Füllguts die Korrosion des leitfähigen Elements ausgeschlossen. Kostengünstige Materialien können nunmehr zur Herstellung des leitfähigen Elements verwendet werden. Kostenintensive Verkapselungen der elektrischen Teile des Meßgerätes sind weitgehend überflüssig.

Gemäß einer vorteilhaften Ausgestaltung der erfindungsgemäßen Vorrichtung wird vorgeschlagen, daß der Behälter bzw. der Behälterteil zumindest im Einflußbereich des elektromagnetischen Feldes als Schauglas ausgebildet ist. Wird die Füllstandsmessung direkt an einem als Schauglas ausgebildeten Behälter ausgeführt, so sieht eine günstige Weiterbildung der erfindungsgemäßen Vorrichtung als Zusatzelement einen leitfähigen Schild vor. Dieser Schild ist - relativ zur Anordnung des leitfähigen Elements gesehen - hinter dem Schauglas angeordnet und garantiert, daß Störstrahlung aus dem entsprechenden Raumbereich wirksam abgeschirmt wird.

Gemäß einer vorteilhaften Ausgestaltung der erfindungsgemäßen Vorrichtung ist das leitfähige Element mittels einer möglichst einfachen Verbindung direkt an dem Behälter bzw. an dem Schauglas befestigt ist. Vorzugsweise handelt es sich bei der Verbindung um eine Klebeverbindung: das leitfähige Element ist an die Außenwand des Behälters oder des Schauglases geklebt.

In Kombination mit der vorhergehend beschriebenen Ausgestaltung - oder aber auch für sich genommenen - ist desweiteren ein Schutzschild aus einem elektrisch leitenden Material vorgesehen. Der Schutzschild ist so plaziert, daß das leitfähige Element zwischen dem Behälter und dem Schutzschild angeordnet ist. Schutzschild und leitfähiges Element sind räumlich voneinander getrennt. Vorzugsweise ist zwischen dem Schutzschild und dem leitfähigen Element ein dielektrisches Material angeordnet. Im einfachsten Fall handelt es sich bei dem dielektrischen Material um Luft. Der Schutzschild kann weiterhin so ausgestaltet sein, daß er das leitfähige Element auf der vom Behälter abgewandten Seite nahezu vollständig umschließt. Aufgabe des Schutzschildes ist die Abschirmung von Störstrahlung aus dem hinter dem leitfähigen Element liegenden Raumbereich, die sich negativ auf die Meßgenauigkeit der Füllstandswerte auswirken kann.

Das leitfähige Element selbst kann jede beliebige Form aufweisen: es kann - im Querschnitt betrachtet - z. B. rund, halbrund oder eckig ausgebildet sein. Als besonders vorteilhaft hat es sich herausgestellt, wenn das leitfähige Element aus zumindest zwei Leitern besteht, wobei wiederum zumindest einer der beiden Leiter auf Masse liegt. Insbesondere in dem Fall, daß das leitfähige Element außerhalb des Behälters montiert ist und zusätzlich mittels eines Schutzschildes Störstrahlung von außen abgeschirmt wird, lassen sich bessere Meßergebnisse erzielen. Der Grund liegt darin, daß bei der mehrteiligen Ausgestaltung des leitfähigen Elements das elektromagnetische Feld, das sich in den Behälter hineinerstreckt, weniger stark durch den Schutzschild beeinflußt wird.

Während die zuvorbeschriebene Ausgestaltung der erfindungsgemäßen Vorrichtung die Anordnung des leitfähigen Elements im Außenbereich des Behälters favorisiert, bezieht sich die nachfolgend beschriebene zweite Ausführungsform auf die Anordnung des leitfähigen Elements in dem Behälter. Insbesondere ist vorgesehen, daß das leitfähige Element zumindest im Bereich bis zum maximalen Füllstand des Behälters von einem dielektrischen Mantel umgeben ist. Weiterhin ist der Abstand des leitfähigen Elements von dem zu detektierenden Füllgut so bemessen ist, daß das Meßsignal mit dem Füllgut in Wechselwirkung tritt und bei Auftreffen auf das Füllgut teilweise reflektiert wird.

Ein gewünschter Abstand zwischen leitfähigem Element und Füllgut läßt sich entweder über die Wahl der Dicke des dielektrischen Materials und/oder über den Abstand des Materials von dem innerhalb des dielektrischen Materials befindlichen leitfähigen Element realisieren. Möglich ist es darüber hinaus, das leitfähige Element in einer Hülse aus einem nicht-leitfähigem Material anzuordnen. Diese Hülse ist innerhalb des Behälters plaziert, und das leitfähige Element wird nachfolgend in die Hülse eingeführt. Ebenso ist es aber auch möglich, das leitfähige Element und die Hülse als Einheit auszubilden und in den Behälter einzubringen. Beispielsweise kann das leitfähige Element unmittelbar von dem nicht-leitfähigem Material umgeben sein.

Die Erfindung wird anhand der nachfolgenden Zeichnungen näher erläutert. Es zeigt:
Fig. 1: eine schematische Darstellung (Querschnitt) einer ersten Ausführungsform der erfindungsgemäßen Vorrichtung,
Fig. 2: eine schematische Darstellung (Querschnitt) einer zweiten Ausführungsform der erfindungsgemäßen Vorrichtung,
Fig. 3: eine schematische Darstellung (Querschnitt) einer dritten Ausführungsform der erfindungsgemäßen Vorrichtung,
Fig. 4: eine schematische Darstellung (Querschnitt) einer Auswahl unterschiedlicher Typen von leitfähigen Elementen, die im Zusammenhang mit der erfindungsgemäßen Lösung verwendet werden können,
Fig. 5: einen Längsschnitt einer vierten Ausführungsform der erfindungsgemäßen Vorrichtung und
Fig. 6: ein Blockschaltbild der Signalerzeugungseinheit und der Empfangs/Auswerteeinheit.

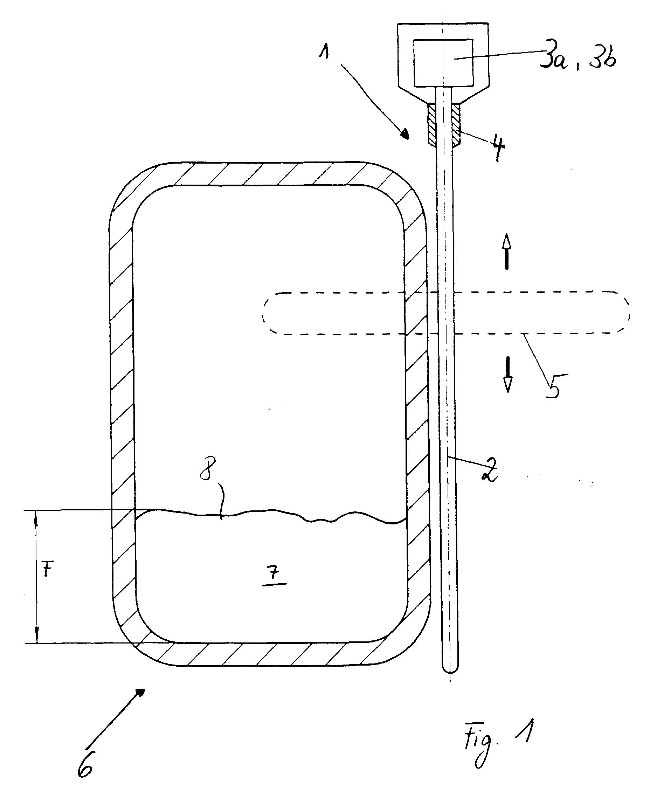

Fig. 1 zeigt im Querschnitt eine schematische Darstellung einer ersten Ausführungsform der erfindungsgemäßen Vorrichtung. Das Füllstandsmeßgerät 1 besteht aus einer Signalerzeugungseinheit 3a, einer Einkoppeleinheit 4, einem leitfähigen Element 2 und einer Empfangs-/Auswerteeinheit 3b. In der Signalerzeugungseinheit 3a erzeugte Meßsignale werden über die Einkoppeleinheit 4 eingekoppelt und entlang des leitfähigen Elements 2 geführt. Das leitfähige Element 2 ist außerhalb des Behälters 6 mittels einer beliebigen, in der Zeichnung nicht gesondert dargestellten Verbindung befestigt. Eine unmittelbare Verbindung zwischen Behälter 6 und leitfähigem Element 2 ist nicht erforderlich, da das elektromagnetische Feld 5, das die Meßsignale längs ihres Weges begleitet, einen relativ großen Raumbereich abdeckt. Der Behälter 6 ist zumindest im Haupt-Wirkungsbereich des elektromagnetischen Feldes 5 aus einem nicht-leitfähigen Material (z. B. Glas, Kunststoff, usw.).

Die Meßsignale, die an dem leitfähigen Element 2 entlanggeführt werden, erzeugen - wie bereits kurz erwähnt - im umgebenden Raum ein elektromagnetisches Feld 5. Das elektromagnetische Feld 5 ist koaxial ausgerichtet und bewegt sich parallel zur Längsachse des leitfähigen Elements. Aufgrund der sprunghaften Änderung der Dielektrizitätszahlen beim Übergang von z. B. Luft in das Füllgut 7 wird das elektromagnetische Feld 5 teilweise reflektiert, sobald es in Kontakt mit der Oberfläche 8 des Füllguts 7 kommt. Die an dem leitfähigen Element 2 zurückgeführten Echosignale werden in der Empfangs-/Auswerteeinheit 3b empfangen. Über die Laufzeit der Meß-/Echosignale wird die Laufstrecke und bei Kenntnis des Abstandes 'Einkoppeleinheit 4 - Behälterboden' der Füllstand des Füllguts 7 in dem Behälter 6 bestimmt.

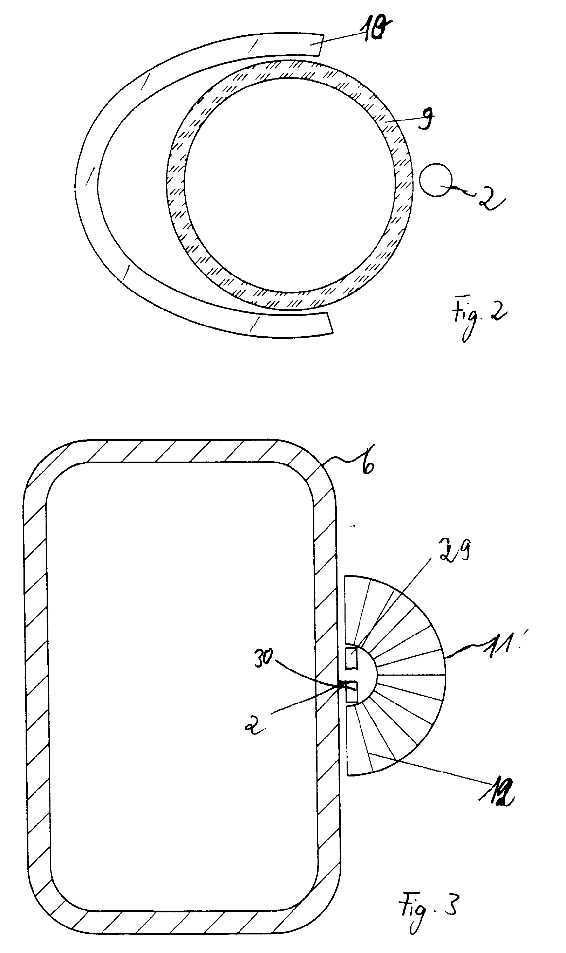

In Fig. 2 ist eine schematische Darstellung (Querschnitt) einer zweiten Ausführungsform der erfindungsgemäßen Vorrichtung zu sehen. Das Füllgut 7, dessen Füllstand zu messen ist, befindet sich in einem Schauglas 9. Außerhalb des Schauglases 9 ist ein leitfähiges Element 2 angeordnet. Um den Einfluß von Störstrahlung auf die Meßergebnisse zu reduzieren, ist in der Fluchtlinie 'leitfähiges Element 2 - Schauglas 9' ein gekrümmter Schutzschild 10 aus einem leitfähigen Material angeordnet. Der Schutzschild 10 liegt auf Masse und schirmt Störstrahlung effektiv ab.

Fig. 3 zeigt eine schematische Darstellung (Querschnitt) einer dritten Ausführungsform der erfindungsgemäßen Vorrichtung. Seitlich von dem Behälter 6 ist das leitfähige Element 2 angeordnet. Um Störstrahlung aus der Umgebung abzuschirmen, ist ein gekrümmter Schutzschild 11 vorgesehen. Dieser Schutzschild 11 weist einen halbkreisförmigen Querschnitt auf und reicht mit seinen Seitenkanten bis in die unmittelbare Nähe des Behälters 6 heran. Zwischen der Innenfläche des Schutzschildes 11 und dem leitfähigen Element 2 ist ein dielektrisches Material 12 vorgesehen.
Das leitfähige Element 2 ist im dargestellten Fall aus zwei Leitern 29, 30 aufgebaut, wobei der Leiter 30 auf Masse liegt. Wie bereits an vorhergehender Stelle beschrieben, wirkt sich die Zwei- bzw. Mehrfachaufteilung des leitfähigen Elements 2 günstig auf das elektromagnetische Meßfeld aus, da insbesondere bei Nutzung eines die Störstrahlung der Umgebung abschirmenden Schutzschildes 11 die Schwächung des elektromagnetischen Feldes im Inneren des Behälters weniger stark ausgeprägt ist.

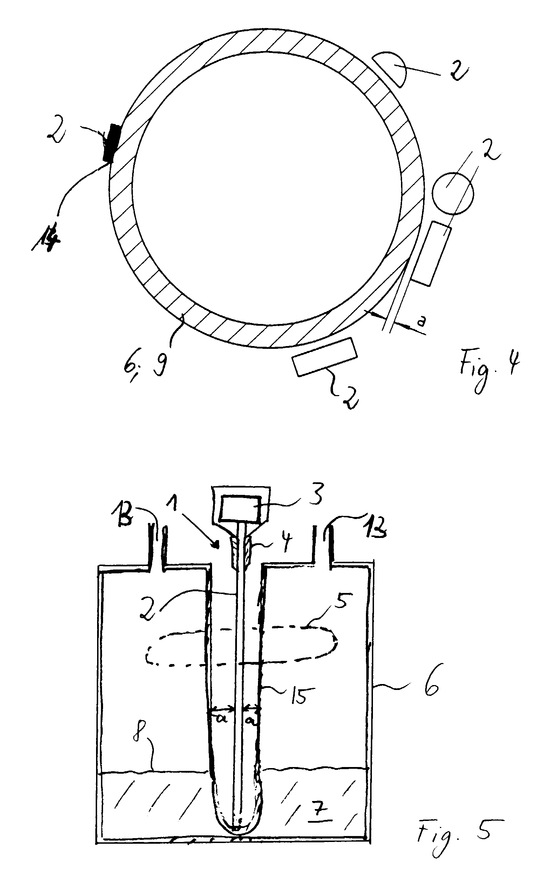

Fig. 4 zeigt eine Auswahl unterschiedlicher Typen von leitfähigen Elementen 2, die im Zusammenhang mit der erfindungsgemäßen Lösung zum Einsatz kommen können. Im Querschnitt haben die leitfähigen Elemente 2 eine kreisförmige, eine halbkreisförmige oder eine eckige (z. B. rechteckige) Form. Desweiteren ist in Fig. 4 eine Art der Befestigung des leitfähigen Elements 2 an dem Behälter 6 dargestellt. Das rechteckige leitfähige Element 2 ist mittels einer Klebeverbindung 14 an die äußere Behälterwand geklebt.

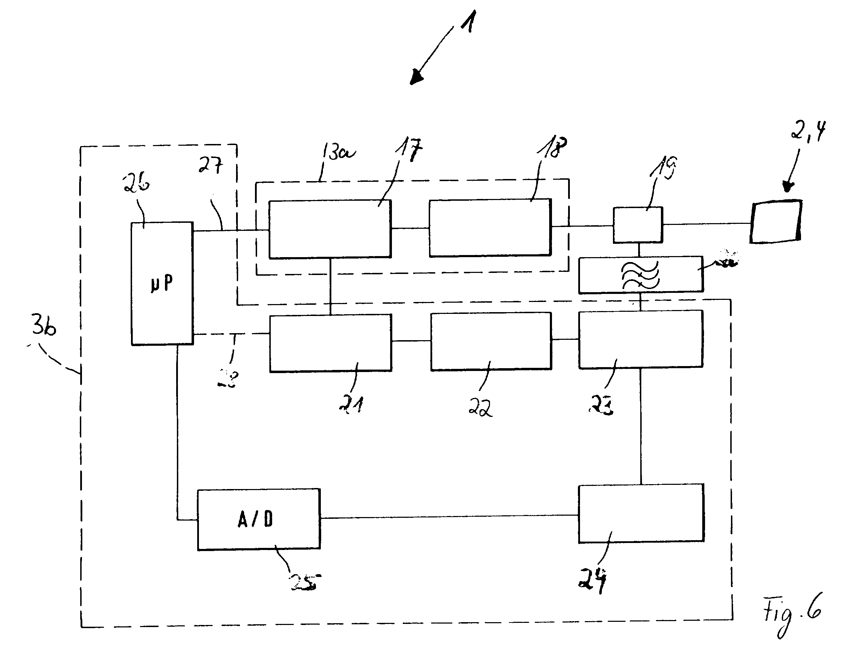

Eine vierte bevorzugte Ausführungsform der erfindungsgemäßen Vorrichtung ist in Fig. 5 im Längsschnitt zu sehen. Während die Figuren Fig. 1 bis Fig. 4 Ausgestaltungen zeigen, bei denen das leitfähige Element 2 außerhalb des Behälters 6 angebracht ist, zeigt Fig. 6 die Anordnung des leitfähigen Elements 2 innerhalb des Behälters 6. Das leitfähige Element 2 ist in eine dielektrische Hülse 15 eingebracht. Die Hülse 15 ist beispielsweise aus Glas gefertigt. Im gezeigten Fall befindet sich zwischen leitfähigem Element 2 und Hülse 15 als zusätzliches Dielektrikum Luft. Möglich ist es aber auch, daß das leitfähige Element von dem dielektrischen Material ummantelt und damit gleichfalls von dem Füllgut 7 abgekapselt ist. Desweiteren können leitfähiges Element 2 und Hülse 15 als voneinander getrennte Komponenten oder als Einheit ausgebildet sein.

In Fig. 6 ist ein Blockschaltbild der Signalerzeugungseinheit 3a und der Empfangs-/Auswerteeinheit 3b dargestellt. Die Signalerzeugungseinheit 3a weist einen Sendetaktgeber 17 und einen Sendeimpulsgenerator 18 auf. Ein Sendetakt des Sendetaktgebers 17 wird dem Sendeimpulsgenerator 18 zugeführt ist. Vorzugsweise wird ein Sendeimpulsgenerator 18 verwendet, der elektromagnetische Signale erzeugt, die die Form von niederenergetischen hochfrequenten kurzen Pulsen haben. Derartige Sendeimpulsgeneratoren sowie in Verbindung damit verwendbare elektronische Schaltungen und Empfangs-und Auswerteschaltungen sind z. B. in der US-PS 5,609,059 beschrieben.

Die elektromagnetischen Meßsignale werden über die Einkoppeleinheit 4 dem leitfähigen Element 2 zugeführt. Umgekehrt gelangen reflektierte Echosignale über das leitfähige Element 2, die Einkoppeleinheit 4, den Richtkoppler 19 und einen dem Richtkoppler 19 nachgeschalteten Hochpaß 20 zur Empfangs-/Auswerteeinheit 3b.

Die Empfangs-/Auswerteeinheit 3b umfaßt eine Zeitverzögerung 21, an deren Eingang der Sendetakt des Sendetaktgenerators 17 anliegt und die einen Abtasttakt erzeugt, der dem um eine variable Verzögerungszeit verzögerten Sendetakt entspricht. Die variable Verzögerungszeit wird z. B. mittels eines Sägezahngenerators bereitgestellt. Der Abtasttakt wird einem Abtastimpulsgenerator 22 zugeführt, der in Abhängigkeit vom Abtasttakt Abtastimpulse generiert und einem ersten Eingang einer Abtast- und Halte Schaltung 23 zuführt. Sendeimpuls- und Abtastimpulsgenerator 18, 22 sind vorzugsweise identisch, so daß sich die von ihnen erzeugten elektromagnetischen Signale lediglich um die variable Verzögerungszeit unterscheiden. Die reflektierten Echosignale liegen über den Richtkoppler 19 und den Hochpaß 20 an einem zweiten Eingang der Abtast- und Halteschaltung 23 an. Eine für die vorliegende Erfindung bestens geeignete Empfangs- und Auswerteeinheit ist übrigens detailliert in der EP 0 875 772 beschrieben.

Im Betrieb werden vorzugsweise periodisch mit der Sendetaktfrequenz kurze Sendepulse erzeugt; die reflektierten Echosignale werden der Abtast- und Halteschaltung 23 zugeführt. Dort wird jedem Echosignal ein Abtastimpuls überlagert und ein daraus resultierendes Gesamtsignal aufgenommen. Das Gesamtsignal wird mittels eines nachgeschalteten Verstärkers 24 verstärkt, über einen in Serie mit dem Verstärker 24 angeordneten Analog-Digital-Wandler 25 digitalisiert und einem Mikroprozessor 26 als Abtastwert zugeführt.

Das Gesamtsignal ist ein Maß für die Übereinstimmung von Echosignal und Abtastimpuls. Die Echosignale treffen periodisch ein, wobei sich aufeinanderfolgende Abtastimpulse voneinander durch eine Zeitverzögerung unterscheiden, die durch die Sägezahnfunktion bestimmt ist. Unter der Voraussetzung, daß sich aufeinanderfolgende Echosignale nicht wesentlich unterscheiden, liefert die Abtast- und Halteschaltung 23 eine stroboskopische Aufzeichnung der Echosignale. Diese Voraussetzung ist typischerweise immer erfüllt, da sich der Füllstand in dem Zeitraum zwischen zwei Sendepulsen praktisch nicht ändert.

Der Mikroprozessor 26 ist über eine erste Leitung 27 mit dem Sendetaktgeber 17 und dem Sendeimpulsgenerator 18 und über eine zweite Leitung 28 mit der Zeitverzögerung 21 und dem Abtastimpulsgenerator 22 verbunden. Im Betrieb startet der Mikroprozessor 26 regelmäßig Meßzyklen. Während eines Meßzyklus' werden die elektromagnetischen Meßsignale -wie zuvor beschrieben- periodisch erzeugt, und die reflektierten Echosignale werden abgetastet. Ein Meßzyklus endet, wenn alle gemäß der Sägezahnfunktion vorgesehenen Zeitverzögerungen durchlaufen wurden. Die einzelnen Abtastwerte werden jeweils in Verbindung mit der zugeordneten momentanen Verzögerung aufgezeichnet. Anhand des Meßsignalverlaufs wird dann die Laufzeit bestimmt.

### Bezugszeichenliste

- 1: Füllstandsmeßgerät
- 2: Leitfähiges Element
- 3: Signalerzeugungseinheit, Empfangs-/Auswerteeinheit
- 4: Einkoppeleinheit
- 5: Elektromagnetisches Feld
- 6: Behälter
- 7: Füllgut
- 8: Oberfläche
- 9: Schauglas
- 10: Schutzschild
- 11: Schutzschild
- 12: Dielektrisches Material
- 13: Einfüllstutzen
- 14: Klebeverbindung
- 15: Hülse
- 16: Innenfläche der Hülse
- 17: Sendetaktgeber
- 18: Sendeimpulsgenerator
- 19: Richtkoppler
- 20: Hochpaß
- 21: Zeitverzögerung
- 22: Abtastimpulsgenerator
- 23: Abtast- und Halteschaltung
- 24: Verstärker
- 25: A/D Wandler
- 26: Mikroprozessor
- 27: Leitung
- 28: Leitung
- 29: Leiter
- 30: Leiter auf Masse

## Patentansprüche

1. Vorrichtung zum Messen des Füllstandes (F) eines Füllguts (7) in einem Behälter (6) mit einer Signalerzeugungseinheit (3a), einer Einkoppeleinheit (4), einem leitfähigen Element (2) und einer Empfangs-/Auswerteeinheit (3b), wobei die Signalerzeugungseinheit (3a) hochfrequente Meßsignale erzeugt, wobei die Einkoppeleinheit (4) die Meßsignale auf das leitfähige Element (2) einkoppelt,
wobei das leitfähige Element (2) eine Länge aufweist, die zumindest dem maximalen Füllstandsmeßbereich in dem Behälter (6) entspricht,
wobei das leitfähige Element (2) in einem vorgegebenen Abstand (a) zu dem Füllgut (7) angeordnet ist und sein Abstand (a) so bemessen ist, daß das von den Meßsignalen erzeugte elektromagnetische Feld (5) mit dem Füllgut (7) in Wechselwirkung tritt und bei Auftreffen auf die Oberfläche (8) des Füllguts (7) teilweise reflektiert wird, und
wobei die Empfangs-/Auswerteeinheit den zeitlichen Signalverlauf der reflektierten und an dem leitfähigen Element entlanggeführten Meßsignale erfaßt und auswertet.

2. Vorrichtung nach Anspruch 1,
wobei das Element (2) außerhalb des Behälters (6) angeordnet ist.

3. Vorrichtung nach Anspruch 1 oder 2,
wobei der Behälter (6) zumindest im Wirkungsbereichs des leitfähigen Elements (2) aus einem nicht leitfähigen Material besteht.

4. Vorrichtung nach Anspruch 1 oder 2,
wobei der Behälter (6) bzw. die Behälterwand zumindest im Wirkungsbereich des leitfähigen Elements (2) als Schauglas (9) ausgebildet ist.

5. Vorrichtung nach Anspruch 4,
wobei ein leitfähiger Schild (10) vorgesehen ist, der zumindest den Teil des Schauglases (9) abschirmt, der - relativ zur Anordnung des leitfähigen Elements (2) gesehen - hinter dem Schauglas (9) angeordnet ist.

6. Vorrichtung nach Anspruch 1, 2, 3, 4 oder 5,
wobei eine Verbindung vorgesehen ist, über die das leitfähige Element (2) an dem Behälter (6) bzw. an dem Schauglas (9) befestigt ist.

7. Vorrichtung nach Anspruch 6
wobei es sich bei der Verbindung um eine Klebeverbindung (14) handelt.

8. Vorrichtung nach einem oder mehreren der vorhergehenden Ansprüche,
wobei ein Schutzschild (11) aus einem elektrisch leitenden Material vorgesehen ist, der in dem Raumbereich des leitfähigen Elements (2) angeordnet ist, der vom Behälter (6) abgewandt ist.

9. Vorrichtung nach Anspruch 8,
wobei der Schutzschild (11) von dem leitfähigen Element (2) räumlich getrennt ist und
wobei zwischen dem leitfähigen Element (2) und dem Schutzschild (11) ein dielektrisches Material (12) vorgesehen ist.

10. Vorrichtung nach Anspruch 1,
wobei das leitfähige Element (2) zumindest im Bereich bis zum maximalen Füllstand (F) des Füllguts (7) in dem Behälter (6) von einer Hülse (15) aus dielektrischem Material umgeben ist,
wobei das leitfähige Element (2) innerhalb des Behälters (6) angeordnet ist, und
wobei der Abstand (a) des leitfähigen Elements (2) von dem Füllgut (6) so bemessen ist, daß das von den Meßsignalen erzeugte elektromagnetische Feld (5) mit dem Füllgut (6) in Wechselwirkung tritt und bei Auftreffen auf die Oberfläche (8) des Füllguts (6) teilweise reflektiert wird.

11. Vorrichtung nach Anspruch 10,
wobei zwischen der Innenfläche (16) der Hülse (15) aus dielektrischem Material und dem leitfähigen Element (2) ein materialfreier Zwischenraum vorgesehen ist.

12. Vorrichtung nach einem oder mehreren der vorhergehenden Ansprüche,
wobei das leitfähige Element (2) aus zumindest zwei Leitern (29, 30) besteht und
wobei zumindest einer der beiden Leiter (29; 30) auf Masse liegt.
